# EUROPÄISCHE PATENTANMELDUNG

(11) **EP 2 255 609 A1**
(43) Veröffentlichungstag der Anmeldung: **01.12.2010**
(21) Anmeldenummer: 10004493.2
(22) Anmeldetag: 28.04.2010
(51) Int. Cl.: A01C 23/02, A01G 25/06, E02B 11/00

(54) **Verfahren und Vorrichtung zur Pflege von Vegetationsschichten**

(30) Priorität: 29.05.2009 DE 102009023271
(71) Anmelder: OSMO-DRAIN e.K., 88348 Bad Saulgau (DE)
(72) Erfinder: Kneussle, Winfried, 88250 Weingarten (DE)
(74) Vertreter: Söltenfuss, Dirk Christian

(57) **Zusammenfassung**

Zur Pflege von Vegetationsschichten (32) wird diesen mittels wenigstens eines unterflurig verlegten Membranschlauchs (12) ein Fluid zugeführt. Dieses Fluid ist ein Flüssigkeit/Gas-Gemisch wie beispielsweise ein Wasser/Luft-Gemisch oder ein Wasser/Sauerstoff-Gemisch, sodass die Vegetationsschichten jederzeit optimal mit Feuchtigkeit und Sauerstoff versorgt werden können.

## Beschreibung

Die vorliegende Erfindung betrifft ein Verfahren und eine Vorrichtung zur Pflege von Vegetationsschichten.

Zur Pflege von Vegetationsschichten, wie zum Beispiel Rasenflächen, Sportrasenflächen, Garten- und Parkanlagen, landwirtschaftlichen Flächen, forstwirtschaftlichen Flächen und dergleichen, werden im Allgemeinen eine herkömmliche Bewässerung von oben sowie ein mechanisches Belüften, Vertikutieren und dergleichen durchgeführt. Um die bekannten Nachteile einer Überkopfberegnung, nämlich die Verdunstung großer Wassermengen, die mangelhafte Wurzelbildung und die Verdichtung des Bodens zu vermeiden, werden immer häufiger Unterflurbewässerungssysteme eingesetzt.

Eine gute Belüftung und ein entsprechendes Wasserangebot sind bekanntermaßen unabdingbare Voraussetzungen für die Entwicklung einer gesunden Bodenvegetation. Es hat sich herausgestellt, dass dem Porenraum im Boden dabei eine Schlüsselfunktion zukommt, da er für die ökologisch entscheidenden Funktionen Drainage, Belüftung und Wasserspeicherung verantwortlich ist. Die Drainage und die anschließende Belüftung tragen im Wesentlichen die Grobporen, die Wasserspeicherung wird von den Mittelporen übernommen. Welche Funktion die jeweiligen Poren übernehmen, hängt also maßgeblich von ihrem Durchmesser und damit von ihrer Kapillarkraft ab. Ist die Kapillarkraft größer als die Gravitationskraft, wird das Wasser im Boden gehalten (Mittelporen); ist sie dagegen kleiner als die Gravitationskraft, fließt das Wasser in den Unterboden ab und gibt danach den Porenraum frei für den Gasaustausch (Grobporen). Damit Drainage und Belüftung funktionieren können, müssen die Poren zudem eine Verbindung untereinander und zur Bodenoberfläche bzw. zur Atmosphäre haben (Porenvernetzung). Bei neu angelegten Vegetationsschichten, wie zum Beispiel bei frisch aufgebauten Sportplätzen, sind eine angepasste Porengrößenverteilung und eine gute Porenvernetzung durch entsprechende Einbauvorschriften meist gewährleistet.

Probleme mit zum Beispiel der Rasentragschicht treten normalerweise erst nach einiger Zeit Benutzung auf. So führen die extremen mechanischen Belastungen während des Spielbetriebs bei Sportrasenplätzen im Laufe der Zeit zu ungünstigen Veränderungen in der Boden- bzw. Porenraumstruktur. Dies wird im Allgemeinen als "Verdichtung" des Bodens bezeichnet. Typische Merkmale eines derart verdichteten Bodens sind lange stehendes Wasser an der Bodenoberfläche und mittelfristig eine Abnahme der Rasenqualität. Ursächlich hierfür ist die nachhaltige Schädigung des Grobporenraums, wodurch die Drainagefunktion weitestgehend verloren geht. Das stehende Wasser unterbindet wiederum den Gasaustausch und in der Folge kommt es zu anaeroben Bodenbedingungen, die bis zum Absterben der Bodenvegetation führen können.

Die Vorteile eines gut belüfteten Bodens lassen sich wie folgt erklären. In einem natürlich gewachsenen Boden nimmt das Wurzellängenwachstum mit der Bodentiefe kontinuierlich ab, da sich mit der Bodentiefe natürlicherweise der Grobporenraum verringert und damit auch der Gasaustausch und im Ergebnis das Wurzelwachstum zurückgehen. Führt man dem Boden in den entsprechenden Tiefen stetig Luft zu, kommt es zu einer deutlichen Erhöhung des Wurzelwachstums.

An dieser Stelle können belüftungsfähige Unterflursysteme ansetzen. Sobald der Gasaustausch über die Oberfläche aufgrund der Verdichtung des Bodens behindert ist, können solche Systeme den fehlenden Sauerstoff durch Luftzufuhr bzw. Zwangsbelüftung in die anaerobe Zone leiten. Auf diese Weise wird das Bodenmilieu wieder voll aerob oder es wird überhaupt aerob gehalten. Das Wurzelwachstum wird stimuliert, sodass die oberirdischen Pflanzenteile keine Qualitätseinbußen erfahren. Die gleichmäßige Durchdringung des Bodens mit Frischluft von unten ist dabei den oberirdisch ansetzenden Aerifizierungsmaßnahmen überlegen, da der Sauerstoff bei jenen vom Rand der Einstiche aus erst mühsam den Boden diffusiv erschließen muss.

Weiter erfordert die andauernde Benutzung der Vegetationsschichten, wie beispielsweise ein Spielbetrieb von Sportrasenplätzen, eine ständige Wiederholung der oberirdischen Aerifizierungsmaßnahmen, da gerade an der Oberfläche die höchsten Belastungen, d.h. Verdichtungen auftreten. Die Unterflursysteme sind dagegen in Tiefen eingebaut, in denen in der Regel keine wesentlichen Verdichtungen mehr auftreten, sodass die Luftausbreitung von diesen Systemen aus unbeeinträchtigt und kontinuierlich stattfinden kann.

Mit einem guten Wurzelwachstum steigt zudem die Scherfestigkeit des Substrats. Dies kann durch eine Bewässerung von unten über den kapillaren Aufstieg zusätzlich gefördert werden. Vorteilhafterweise wird dabei nur der Wasserspeicher des Bodens wieder gefüllt (Ergebnis: Wassererspamis), und der Grobporenraum bleibt dauerhaft für die Belüftung frei. Während die oberirdische Beregnung dazu führt, dass die Pflanzen ein hauptsächlich flaches Wurzelwerk entwickeln, zwingt die Unterflurbewässerung die Pflanzen zu einem tiefen Wurzelwachstum dem Wasser entgegen. Diese Tiefenerschließung erhöht einerseits den Bodenzusammenhalt (Scherfestigkeit), andererseits werden die Wurzeln dadurch besser vor äußeren, an der Oberfläche wirkenden Einflüssen geschützt. Eine solche forcierte Tiefenerschließung kann sich auch bei Rollrasenflächen besonders positiv auswirken.

Ein weiterer positiver Aspekt von Unterflursystemen ist der Synergieeffekt beim gleichzeitigen Einsatz von Rasenheizungen. Der Wärmetransport im Boden beruht im Wesentlichen auf den Bewegungen des Wassers im Boden. Bei Unterflursystemen wird deshalb die Wärme durch den kapillaren Aufstieg bevorzugt nach oben transportiert. Der durch die Drainage verursachte, konvektive Wärmetransport nach unten bzw. die Abkühlung durch kaltes, drainierendes Oberflächenwasser entfallen dagegen.

Ein unterfluriges Belüftungssystem ist zum Beispiel aus der DE 38 29 560 A1 bekannt. Dieses System umfasst eine Versorgung des Wurzelbereichs von Pflanzen mit Sauerstoff mit Hilfe von unterflurig verlegten Membranschläuchen.

Darüber hinaus wurde vom Erfinder das so genannte OSMO-DRAIN®-System entwickelt. Der grundsätzliche Aufbau und die grundsätzliche Funktionsweise dieses OSMO-DRAIN®-Systems sind zum Beispiel in DE 101 37 147 A1 und DE 202 11 742 U1 im Detail beschrieben.

Die in diesen beiden Dokumenten offenbarten Systeme enthalten eine Anordnung von unterflurig verlegten, für Fluide durchlässigen Membranschläuchen, ein mit den Membranschläuchen verbundenes Kupplungselement mit einem ersten Anschluss zum Zuführen einer Flüssigkeit unter Druck zu den Membranschläuchen und einem zweiten Anschluss zum Entfernen von Flüssigkeit und/oder Gasen durch Unterdruck aus den Membranschläuchen, sowie eine Steuereinrichtung zum Steuern dieses Kupplungselements, um die Membranschläuche wahlweise mit dem ersten oder dem zweiten Anschluss des Kupplungselements zu verbinden. Zudem kann das Kupplungselement noch mit einem dritten Anschluss für eine Druckluftquelle versehen sein. Die Steuereinrichtung ist vorzugsweise mit verschiedenen Sensoren und Sonden verbunden, um eine automatische Steuerung des Systems zu ermöglichen.

Dieses OSMO-DRAIN®-System ermöglicht im Gegensatz zu früheren Pflegesystemen mit nur einem einzigen Schlauch bzw. Schlauchsystem sowohl ein Bewässern als auch ein Entwässern, Entgasen und/oder Belüften einer Vegetationsschicht, indem der Membranschlauch wahlweise mit dem ersten Anschluss zur Flüssigkeitszufuhr unter Druck, mit dem zweiten Anschluss zum Entfernen von Flüssigkeit und Gasen durch Unterdruck oder dem dritten Anschluss zur Luftzufuhr unter Druck zu bzw. aus dem Schlauchsystem verbunden werden kann. Der Schlauch ist als Membranschlauch, d.h. poröser Schlauch ausgebildet, der den Durchtritt von Fluiden, wie Wasser oder Gasen, in beiden Durchtrittsrichtungen erlaubt.

Im Fall des Anschlusses des Membranschlauches an eine Flüssigkeitszufuhr unter Druck wird die Flüssigkeit durch die poröse Wandung des Schlauches in das umgebende Erdreich der Vegetationsschicht gedrückt. Über diesen ersten Anschluss des Kupplungselements können der Vegetationsschicht bei Bedarf auch zusätzliche Wirkstoffe zur Düngung, Schädlingsbekämpfung, Unkrautbekämpfung, Krankheitsbekämpfung und dergleichen Pflege dem unter Druck zugeführten Wasser beigemischt werden. In gleicher Weise kann beim Anschluss des Membranschlauches an eine Luft- oder Sauerstoffzufuhr unter Druck die Luft bzw. der Sauerstoff durch die poröse Wandung des Schlauches in das umgebende Erdreich gedrückt werden. Im Fall des Anschlusses an Unterdruck werden das im umliegenden Erdreich übermäßig vorhandene Wasser und/oder das beispielsweise in Folge von Staunässe entwickelte Faulgas durch die poröse Wandung des Membranschlauches in den Schlauch gesaugt und dann durch das Schlauchsystem abtransportiert.

Mit diesem System ist wahlweise auch ein Beheizen der Vegetationsschicht möglich, indem dem Schlauchsystem über den ersten Anschluss bzw. den dritten Anschluss unter Druck warmes Wasser oder warme Luft zugeleitet werden kann.

Neben dem OSMO-DRAIN®-System selbst hat der Erfinder auch ein Verfahren und eine Vorrichtung zum unterflurigen Verlegen von Membranschläuchen für ein solches System entwickelt.

Bei dem in der EP 1 811 218 A1 beschriebenen Verfahren werden zunächst mittels einer rotierenden Schneidevorrichtung ein oder mehrere Schlitze mit einer Tiefe von mindestens der Einbautiefe des Membranschlauchs und einer Breite kleiner oder gleich dem Durchmesser des Membranschlauchs unter gleichzeitiger Lockerung des Erdreichs durch eine wechselweise Querbewegung des Erdreichs zumindest im Einbautiefenbereich des Membranschlauchs in den Boden geschnitten. Dann werden die geschnittenen Schlitze mittels einer Aufweitungsvorrichtung jeweils auf eine Breite von wenigstens dem Durchmesser des Membranschlauchs aufgeweitet; und schließlich wird jeweils ein Membranschlauch von einer Aufnahmevorrichtung durch eine Einlegevorrichtung in die aufgeweiteten Schlitze eingelegt.

Da im ersten Schritt nur relativ schmale Schlitze in den Boden geschnitten werden, wird eine ggf. bereits vorhandene Vegetationsschicht nicht geschädigt. Die gleichzeitige Lockerung des Erdreichs beim Schneiden der Schlitze wirkt einer Verdichtung entgegen, sodass die für das Pflegesystem notwendige Kapillarität des an den Membranschlauch angrenzenden Erdreichs gewährleistet bleibt. Außerdem werden die geschnittenen Schlitze nur auf den Durchmesser des Membranschlauchs aufgeweitet, sodass der in diesen aufgeweiteten Schlitz eingelegte Membranschlauch einen gewünschten engen Kontakt zum angrenzenden Erdreich hat. Das Verlegen des Membranschlauchs kann so in einfacher Weise automatisiert bzw. halbautomatisiert werden, und die ggf. bereits vorhandene Rasenfläche oder dergleichen wird beim Verlegen des Schlauchsystems geschont bzw. nicht geschädigt, sodass sie bereits kurz nach der Installation des OSMO-DRAIN®-Systems wieder voll nutzbar ist.

Wie bereits oben erwähnt, kann das unterflurig verlegte Membranschlauchsystem in vorteilhafter Weise auch zum Beheizen des Erdreichs bzw. der Vegetationsschichten verwendet werden. Das Membranschlauchsystem ist dabei herkömmlichen Rasenheizungen überlegen, da nicht nur das Erdreich in unmittelbarer Umgebung des Heizschlauchs erwärmt wird. Vielmehr wird warmes Wasser oder warme Luft unter Druck in das Erdreich gefördert und aufgrund der Kapillarwirkung durch den Porenraum im Erdreich nach oben transportiert.

Der Erfindung liegt die Aufgabe zugrunde, ein verbessertes Verfahren und eine verbesserte Vorrichtung zur Pflege von Vegetationsschichten zu schaffen, die eine möglichst optimale Versorgung von Vegetationsschichten mit Flüssigkeit und Sauerstoff ermöglichen.

Gemäß einem ersten Aspekt der Erfindung wird diese Aufgabe gelöst durch ein Verfahren zur Pflege von Vegetationsschichten mit den Merkmalen des Anspruchs 1. Vorteilhafte Ausgestaltungen und Weiterbildungen der Erfindung sind Gegenstand der abhängigen Ansprüche 2 bis 5.

Bei dem Verfahren zur Pflege von Vegetationsschichten wird den Vegetationsschichten mittels wenigstens eines unterflurig verlegten Membranschlauchs ein Fluid zugeführt. Gemäß der Erfindung ist dieses Fluid ein Flüssigkeit/Gas-Gemisch.

Aufgrund des unterflurigen Zuführens des Fluids zu den Vegetationsschichten wird das Fluid direkt dem Wurzelbereich der Pflanzen zur Verfügung gestellt. Dies führt, wie oben beschrieben, im Vergleich zu Überkopfberegnung und mechanischem Aerifizieren zu verschiedenen Vorteilen. Erfindungsgemäß wird den Vegetationsschichten nun ein Flüssigkeit/Wasser-Gemisch zugeführt. Auf diese Weise können den Vegetationsschichten im Gegensatz zu den herkömmlichen Verfahren Feuchtigkeit und Sauerstoff gleichzeitig zugeführt werden. So können in vorteilhafter Weise ein zwischenzeitliches Austrocknen des Erdreichs oder eine zwischenzeitliche Übernässung des Erdreichs vermieden und die Pflanzen stets optimal mit Feuchtigkeit und Sauerstoff versorgt werden.

Ein "Membranschlauch" ist ein Schlauch, der den Durchtritt von Fluiden (Flüssigkeiten und Gase) in beiden Durchtrittsrichtungen erlaubt. Er kann flexibel bzw. biegsam oder auch starr sein und besteht vorzugsweise aus einem chemisch und physikalisch widerstandsfähigen Kunststoff- oder Kautschukmaterial (zum Beispiel Altreifengranulat).

In einer Ausgestaltung der Erfindung wird das Flüssigkeit/Gas-Gemisch durch Begasen einer Flüssigkeit erzeugt. Dieses Begasen einer Flüssigkeit kann zum Beispiel mittels eines so genannten Wasserbelüfters erfolgen, der in verschiedenen Ausführungsformen im Stand der Technik bekannt ist.

Das Flüssigkeit/Gas-Gemisch kann zum Beispiel durch Injizieren eines Gases in einen Flüssigkeitsstrom oder durch Mitreißen eines Gases durch einen Flüssigkeitsstrom erzeugt werden.

Das Flüssigkeit/Gas-Gemisch ist vorzugsweise ein Wasser/Luft-Gemisch oder ein Wasser/ Sauerstoff-Gemisch.

Ferner können dem Flüssigkeit/Gas-Gemisch zusätzliche Wirkstoffe (z.B. Düngemittel, Schädlingsbekämpfungsmittel und dergleichen) beigemengt werden.

In einer weiteren Ausgestaltung der Erfindung kann das Flüssigkeit/Gas-Gemisch vor dem Zuführen zu den Vegetationsschichten temperiert werden. Zusätzlich oder alternativ kann das Flüssigkeit/Gas-Gemisch auch im Wesentlichen während des gesamten Zufuhrweges zu den Vegetationsschichten temperiert werden.

Unter dem Begriff des "Temperierens" werden ein Erwärmen bzw. Heizen und ein Kühlen sowie auch ein Halten in einem bestimmten Temperaturbereich verstanden.

In einer noch weiteren Ausgestaltung der Erfindung kann ein Druck des Flüssigkeit/GasGemisches auf einen vorbestimmten Wert oder Wertebereich geregelt bzw. gesteuert werden.

Gemäß einem zweiten Aspekt der Erfindung wird die obige Aufgabe gelöst durch eine Vorrichtung zur Pflege von Vegetationsschichten mit den Merkmalen des Anspruchs 6. Vorteilhafte Ausgestaltungen und Weiterbildungen der Erfindung sind Gegenstand der abhängigen Ansprüche 7 bis 15.

Die Vorrichtung zur Pflege von Vegetationsschichten weist wenigstens einen unterflurig verlegten Membranschlauch zum Zuführen eines Fluids zu den Vegetationsschichten und eine mit dem wenigstens einen Membranschlauch verbundene Versorgungseinheit auf. Erfindungsgemäß wird vorgeschlagen, dass die Versorgungseinheit wenigstens eine Vorrichtung zum Bereitstellen eines Flüssigkeit/Gas-Gemisches aufweist.

Mit dieser Vorrichtung lassen sich die gleichen Vorteile bei der Pflege von Vegetationsschichten erzielen, wie sie oben in Zusammenhang mit dem Verfahren der Erfindung genannt worden sind.

In einer Ausgestaltung der Erfindung ist die Vorrichtung zum Bereitstellen eines Flüssigkeit/Gas-Gemisches eine Vorrichtung zum Begasen von Flüssigkeiten. Diese kann zum Beispiel einen ersten Anschluss zum Zuführen einer Flüssigkeit unter Druck und einen zweiten Anschluss zum Zuführen eines Gases - je nach Ausführungsform mit oder ohne Druck - in den Flüssigkeitsstrom aufweisen.

Die Vorrichtung zum Bereitstellen eines Flüssigkeit/Gas-Gemisches kann zum Beispiel in die Versorgungseinheit integriert sein. Alternativ kann die Versorgungseinheit auch einen Anschluss zum Anschließen der Vorrichtung zum Bereitstellen eines Flüssigkeit/GasGemisches an die Versorgungseinheit aufweisen.

In einer weiteren Ausgestaltung der Erfindung ist die Vorrichtung zum Bereitstellen eines Flüssigkeit/Gas-Gemisches so ausgebildet ist, dass sie wahlweise auch nur eine Flüssigkeit oder nur ein Gas bereitstellt. Dies kann die Flexibilität des Pflegesystems für verschiedene Anwendungen und Umgebungsbedingungen erhöhen.

Das Flüssigkeit/Gas-Gemisch ist vorzugsweise ein Wasser/Luft-Gemisch oder ein Wasser/ Sauerstoff-Gemisch.

In einer Ausgestaltung der Erfindung kann die Versorgungseinheit ferner wenigstens einen oder mehrere Anschlüsse aufweisen, die ausgewählt sind aus einem Anschluss zum Zuführen einer Flüssigkeit unter Druck, einem Anschluss zum Zuführen eines Gases unter Druck und einem Anschluss zum Entfernen von Flüssigkeiten und/oder Gasen durch Unterdruck in den bzw. aus dem wenigstens einen Membranschlauch.

In einer weiteren Ausgestaltung der Erfindung kann die Versorgungseinheit ferner mit einer (internen oder externen) Temperiereinrichtung zum Temperieren des dem wenigstens einen Membranschlauch zugeführten Fluids versehen sein. Auf diese Weise können die Fluide den Vegetationsschichten in einem für die Pflege der Vegetationsschichten optimalen Temperaturbereich zugeführt werden. Alternativ oder zusätzlich kann der wenigstens eine Membranschlauch im Wesentlichen über seine gesamte Länge mit einer Temperiervorrichtung versehen sein. Durch diese Maßnahme kann erreicht werden, dass die durch den Membranschlauch transportierten Fluide über lange Wegstrecken hinweg mit einer im Wesentlichen gleichen Temperatur aus dem Membranschlauch in ein dieses umgebendes Erdreich ausgegeben werden können. Als Ergebnis können die Vegetationsschichten mit Hilfe eines derart ausgestatteten Membranschlauchs über einen ausgedehnten Pflegebereich hinweg gleichmäßig temperiert werden.

Ferner kann eine Zugabevorrichtung zum Zugeben eines zusätzlichen Wirkstoffes (z.B. Düngemittel, Schädlingsbekämpfungsmittel und dergleichen) zu dem dem wenigstens einen Membranschlauch zugeführten Fluid vorgesehen sein. Durch diese Zugabevorrichtung können die Funktionalitäten des Pflegesystems erweitert und/oder an die jeweiligen Umgebungsbedingungen angepasst werden.

In einer weiteren Ausgestaltung der Erfindung können die Versorgungseinheit und/oder die Vorrichtung zum Bereitstellen eines Flüssigkeit/Gas-Gemisches ferner einen Druckregler zum Regeln bzw. Steuern eines Drucks des den Vegetationsschichten zugeführten Fluids aufweisen. Mit einem solchen Druckregler kann der Druck des den Vegetationsschichten zugeführten Fluids so eingestellt werden, dass das Fluid über den gesamten Pflegebereich hinweg möglichst gleichmäßig den Vegetationsschichten zur Verfügung gestellt wird.

In einer noch weiteren Ausgestaltung der Erfindung können die Versorgungseinheit und/oder die Vorrichtung zum Bereitstellen eines Flüssigkeit/Gas-Gemisches auch eine Filtervorrichtung zum Filtern des den Vegetationsschichten zugeführten Fluids aufweisen.

Obige sowie weitere Merkmale, Vorteile und Anwendungsmöglichkeiten der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Darstellung des Aufbaus eines beispielhaften Systems zur Pflege von Vegetationsschichten gemäß der vorliegenden Erfindung;
- Fig. 1A: eine vergrößerte, schematische Teilansicht einer Versorgungseinheit des in Fig. 1 dargestellten Systems gemäß einer alternativen Ausführungsform;
- Fig. 2: eine schematische Darstellung von unterflurig verlegten Membranschläuchen des Systems von Fig. 1;
- Fig. 3: eine vergrößerte Schnittansicht eines Membranschlauchs gemäß einem ersten Ausführungsbeispiel der Erfindung;
- Fig. 4: eine vergrößerte Schnittansicht eines Membranschlauchs gemäß einem zweiten Ausführungsbeispiel der Erfindung;

- Fig. 5: eine stark schematisierte Seitenansicht einer Vorrichtung zum unterflurigen Verlegen von Membranschläuchen zum Installieren eines in Fig. 1 veran- schaulichten Systems gemäß einem ersten Ausführungsbeispiel; und
- Fig. 6: eine stark schematisierte Seitenansicht einer Vorrichtung zum unterflurigen Verlegen von Membranschläuchen zum Installieren eines in Fig. 1 veran- schaulichten Systems gemäß einem zweiten Ausführungsbeispiel.

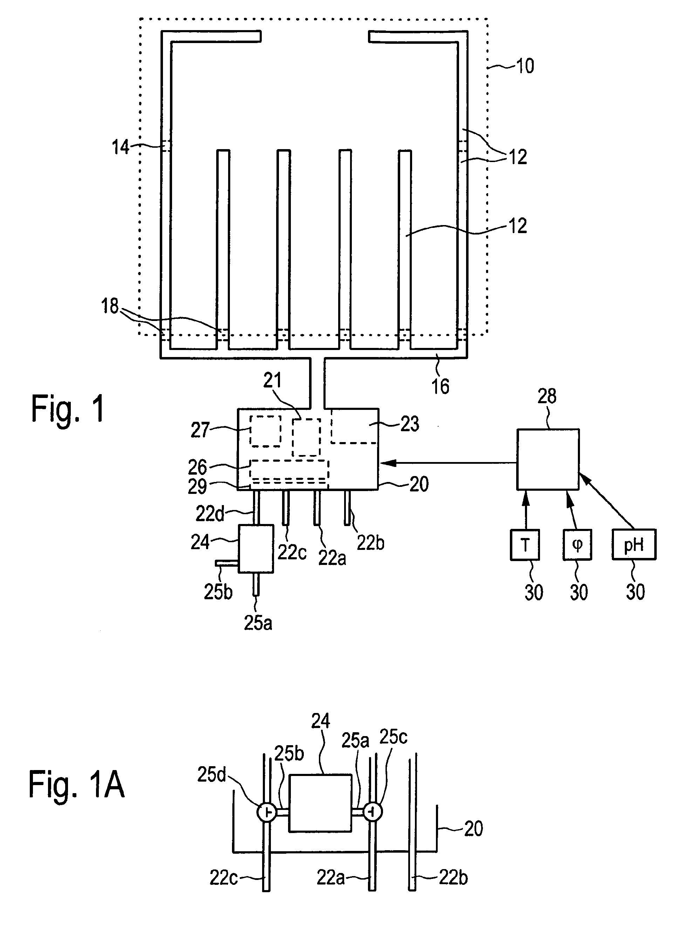

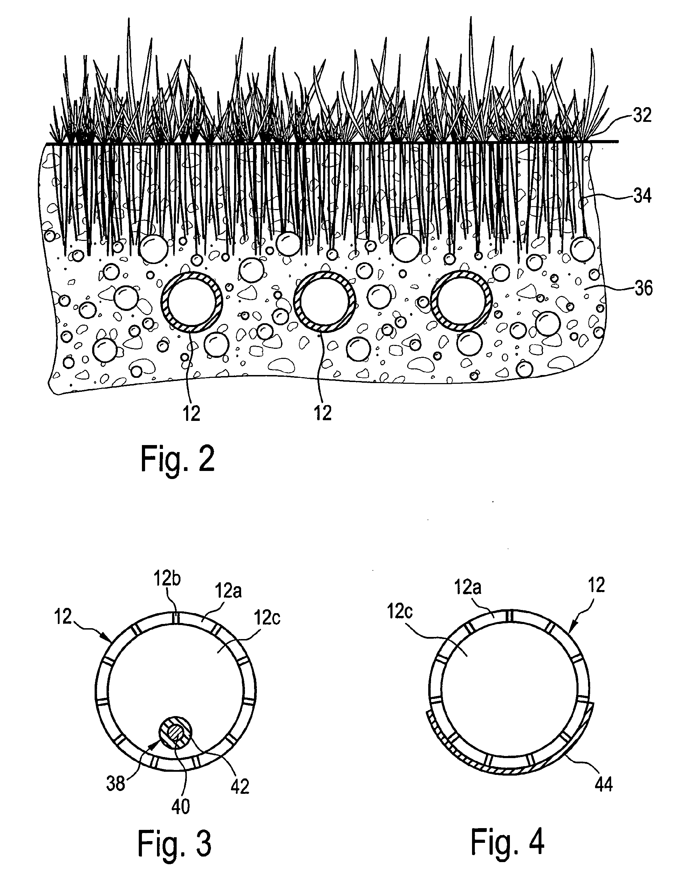

Anhand von Fig. 1, 1A und 2 werden zunächst beispielhaft der Aufbau und die Funktionsweise eines erfindungsgemäßen Systems zur Pflege von Vegetationsschichten näher beschrieben. Der Aufbau des Systems basiert im Wesentlichen auf dem OSMO-DRAIN®-System, wie es zum Beispiel in den bereits eingangs genannten Patentdokumenten DE 101 37 147 A1 und DE 202 11 742 U1 im Detail beschrieben ist. Auf diese beiden Dokumente wird daher hiermit vollinhaltlich Bezug genommen.

Während die vorliegende Erfindung nachfolgend anhand ihrer bevorzugten Anwendung auf eine Fläche mit Vegetationsschichten (Neuanlage oder Altbestand) erläutert wird, ist die Erfindung in analoger Weise auch zum Anlegen von Flächen einsetzbar, die mit einer Kunstrasendecke oder einem Bodenbelag anderer Art, Beschaffenheit, Materialauswahl, usw. versehen werden. Speziell bei Kunstrasenflächen können sich in der Praxis spezielle Vorteile des OSMO-DRAIN®-Systems zeigen (insbesondere in Zusammenhang mit der Funktion des Beheizens).

Das System zur Pflege einer Vegetationsschicht 32, wie zum Beispiel einer Rasenfläche, Sportrasenfläche, Garten- oder Parkanlage oder einer Fläche in der Land- und Forstwirtschaft, weist im Allgemeinen eine Vielzahl von Membranschläuchen 12 auf, die etwa parallel zueinander unterflurig in einem vorgegebenen Pflegebereich 10 verlegt sind. Die Membranschläuche 12 können bei Bedarf über entsprechende Kupplungselemente 14 miteinander verbunden werden, um einen größeren Pflegebereich 10 zu bedienen bzw. die Membranschläuche 12 variabler verlegen zu können. Je nach Größe, Umriss, Profil und Bodenbeschaffenheit des Pflegebereichs 10 können die Membranschläuche 12 zumindest teilweise auch in anderen, d.h. nicht-parallelen Konfigurationen verlegt werden. In dem gezeigten Ausführungsbeispiel sind die mehreren Membranschläuche 12 über weitere Kupplungselemente 18 mit einer Verteilungsvorrichtung 16, die wahlweise rohrartig oder schlauchartig ausgestaltet sein kann, verbunden. Über diese - im Gegensatz zu den Membranschläuchen 12 nicht poröse Verteilungsvorrichtung 16 sind die Membranschläuche 12 mit einer Versorgungseinheit 20 verbunden. Grundsätzlich ist es aber auch denkbar, dass die Membranschläuche 12 direkt an die Versorgungseinheit 20 angeschlossen werden.

Die Versorgungseinheit 20 weist in dem in Fig. 1 dargestellten Ausführungsbeispiel vier Anschlüsse 22a, 22b, 22c, 22d auf. Wahlweise sind natürlich auch weniger als vier oder mehr als vier Anschlüsse möglich. Außerdem können diese Anschlüsse 22a..d in beliebigen Kombinationen und Anzahlen aus den nachfolgend beschriebenen Ausführungsformen von Anschlüssen ausgewählt werden.

Über den ersten Anschluss 22a kann der Versorgungseinheit 20 und damit schließlich auch den Membranschläuchen 12 unter Druck eine Flüssigkeit, beispielsweise Wasser, zugeführt werden. Die unter Druck in die Membranschläuche 12 gepumpte Flüssigkeit tritt durch die poröse Wandung der Membranschläuche 12 in das umliegende Erdreich 36 der Vegetationsschicht 32 aus und gelangt so direkt in den Wurzelbereich 34.

Über den zweiten Anschluss 22b der Versorgungseinheit 20 sind die Verteilungsvorrichtung 16 und die Membranschläuche 12 an Unterdruck anschließbar. Durch den Unterdruck werden die Membranschläuche 12 zunächst entleert, sodass sich auch in den Membranschläuchen 12 ein entsprechender Unterdruck aufbaut. Durch diesen Unterdruck im Schlauchinnern dringen Flüssigkeiten und/oder Gase aus dem umliegenden Erdreich 36 durch die poröse Wandung der Membranschläuche 12 in diese ein und werden abgesaugt.

Die Versorgungseinheit 20 enthält weiter einen dritten Anschluss 22c, über den Druckluft bzw. allgemein ein Gas unter Druck angeschlossen werden kann. Diese Druckluft wird über die Versorgungseinheit 20 in die Membranschläuche 12 gepumpt und kann beispielsweise dazu verwendet werden, die Poren 12b der porösen Wandung 12a der Membranschläuche 12 gelegentlich frei zu blasen, um eine Verstopfung durch das umliegende Erdreich 36 zu verhindern und damit ihre Funktionalität zu gewährleisten. Ferner kann die Vegetationsschicht 32 mittels dieser Druckluft belüftet und insbesondere mit Sauerstoff versorgt werden.

In einer anderen Ausführungsform sind der obige zweite und der obige dritte Anschluss 22b und 22c als ein gemeinsamer Anschluss ausgebildet, der an eine Pumpe zum Beispiel in Form eines Seitenkanalverdichters anschließbar ist, die wahlweise im Saugbetrieb oder im Druckbetrieb betrieben werden kann. Zwischen dem gemeinsamen Anschluss 22bc und dieser Pumpe kann zudem ein Wasserabscheider vorgesehen sein, um das konstante Vakuum aufrechtzuerhalten und die Pumpe gegen Flüssigkeit zu schützen.

Dem vierten Anschluss 22d der Versorgungseinheit 20 schließlich ist eine Vorrichtung 24 zum Begasen von Flüssigkeiten vorgeschaltet. Diese Vorrichtung 24 weist einen ersten Anschluss 25a zum Zuführen einer Flüssigkeit, beispielsweise Wasser, unter Druck und einen zweiten Anschluss 25b zum Zuführen eines Gases, beispielsweise Luft oder Sauerstoff, mit oder ohne Druck auf. Das Gas kann zum Beispiel unter Druck in den Flüssigkeitsstrom des ersten Anschlusses 25a injiziert werden. Alternativ kann das Gas einfach durch eine Öffnung von dem Flüssigkeitsstrom mitgerissen werden. Diese letztgenannte Variante kann insbesondere bei nur kleinen erforderlichen Gasmengen und/oder kleinen Pflegebereichen 10 ausreichend sein.

Derartige Vorrichtungen 24 sind zum Beispiel als so genannte "Wasserbelüfter" bekannt. Die vorliegende Erfindung ist dabei nicht auf eine spezielle Ausführungsform eines solchen Wasserbelüfters beschränkt.

Über den vierten Anschluss 22d mit dem vorgeschalteten Wasserbelüfter 24 wird der Versorgungseinheit 20 und damit schließlich den Membranschläuchen 12 ein Wasser/ Sauerstoff-Gemisch oder ein Wasser/Luft-Gemisch, allgemein ein Flüssigkeit/GasGemisch, unter Druck zugeleitet. Dieses Wasser/Sauerstoff-Gemisch tritt durch die poröse Wandung 12a der Membranschläuche 12 in das umliegende Erdreich 36 der Vegetationsschicht 32 aus und gelangt direkt in den Wurzelbereich 34.

Bei einem System, bei dem Wasser und Sauerstoff nur separat voneinander und sequentiell über den ersten und den dritten Anschluss 22a, 22c der Versorgungseinheit 20 zugeführt werden können, können die Betriebsarten Belüftung und Gasaustausch zur Austrocknung des Wurzelraums 34 der Vegetationsschichten 32 führen. Dieser Effekt wird bei einem zusätzlichen Beheizen noch verstärkt. Zur Rettung der Vegetationsschichten 32 muss daher ggf. zu ungeeigneten Zeitpunkten bewässert werden, was in einigen Fällen zu einer ungewünschten Übernässung des Erdreichs 36 und der Vegetationsschichten 32 führen kann.

Im Gegensatz dazu bietet der Wasserbelüfter 24 die Möglichkeit, die Vegetationsschichten 32 gleichzeitig mit Wasser und Sauerstoff zu versorgen, was zu einer optimalen und bedarfsgerechten Behandlung des Wurzelbereichs 34 führt. Insbesondere können ein Austrocknen der Vegetationsschicht 32, ein Übernässen des Erdreichs 36 und eine Unterversorgung des Wurzelbereichs 36 auf einfache Weise vermieden werden.

In dem Ausführungsbeispiel von Fig. 1 ist der Wasserbelüfter 24 der Versorgungseinheit 20 vorgeschaltet, d.h. an deren vierten Anschluss 22d angeschlossen. Alternativ ist es auch möglich, einen solchen Wasserbelüfter 24 in die Versorgungseinheit 20 zu integrieren. Fig. 1A zeigt eine solche alternative Ausführungsform einer Versorgungseinheit 20 mit einer integrierten Vorrichtung 24 zum Bereitstellen eines Flüssigkeit/GasGemisches.

In dem Beispiel von Fig. 1A ist die Versorgungseinheit 20 mit einem ersten Anschluss 22a zum Zuführen einer Flüssigkeit, beispielsweise Wasser, unter Druck, einem zweiten Anschluss 22b zum Anschließen eines Unterdrucks und einem dritten Anschluss 22c zum Zuführen eines Gases, beispielsweise Luft oder Sauerstoff, unter Druck versehen. Die über den ersten Anschluss 22a zur Verfügung gestellte Flüssigkeit kann entweder direkt den Membranschläuchen 12 zugeleitet werden oder dem ersten Anschluss 25a des Wasserbelüfters 24 zugeleitet werden. In analoger Weise kann das über den dritten Anschluss 22c der Versorgungseinheit 20 zur Verfügung gestellte Gas entweder direkt den Membranschläuchen 12 zugeleitet werden oder dem zweiten Anschluss 25b des Wasserbelüfters 24 zugeleitet werden. Der erste und der zweite Anschluss 25a, 25b des Wasserbelüfters 24 können zu diesem Zweck zum Beispiel über entsprechende Zweiwegeventile 25c, 25d oder dergleichen Stellelemente mit dem ersten bzw. dritten Anschluss 22a, 22c gekoppelt sein.

Auf diese Weise besteht ebenfalls die Möglichkeit, wahlweise eines der möglichen Fluide Flüssigkeit, Gas und Flüssigkeit/Gas-Gemisch von der Versorgungseinheit 20 in die Membranschläuche 12 zu pumpen und zu den Vegetationsschichten 32 zu leiten.

Vorzugsweise enthält die Versorgungseinheit 20 auch einen oder mehrere Filter 29 für den jeweiligen Fluidstrom.

Des Weiteren ist ein Druckregler 21 vorgesehen, um einen Druck des jeweiligen Fluids, das in die Membranschläuche 12 geleitet wird, auf einen vorbestimmten Wert bzw. Wertebereich zu regeln bzw. zu steuern.

Mit Hilfe dieses Druckreglers 21 kann das Pflegesystem auf einfache Weise an den jeweiligen Pflegebereich 10 und/oder die jeweiligen Umgebungsbedingungen angepasst werden. Insbesondere kann der Fluiddruck derart eingestellt werden, dass eine gleichmäßige Versorgung der Vegetationsschichten 32 mit dem jeweiligen Fluid über den gesamten Pflegebereich 10 hinweg erzielt wird.

Der Filter 21 und/oder der Druckregler 21 können wahlweise intern oder extern bezüglich der Versorgungseinheit 20 angeordnet sein.

In die Versorgungseinheit 20 sind ferner eine Temperiereinrichtung 26 zum Temperieren der Fluide, bevor diese in die Verteilungsvorrichtung 16 und in die Membranschläuche 12 gelangen, ggf. eine Stromversorgung 23 für die später zu erläuternden Temperiervorrichtungen 38 der Membranschläuche 12 und/oder eine Zugabevorrichtung 27 zum Zugeben zusätzlicher Wirkstoffe in den Fluidstrom integriert. Mögliche Wirkstoffe sind beispielsweise Mittel zur Düngung, Schädlingsbekämpfung, Unkrautbekämpfung, Krankheitsbekämpfung und dergleichen. Die Temperiereinrichtung 26 kann zum Kühlen, zum Heizen oder zum wahlweisen Kühlen oder Heizen ausgebildet sein. Eine mögliche Ausführungsform für diese Temperiereinrichtung 26 ist zum Beispiel ein Durchlauferhitzer. Auch Temperiereinrichtung 26, Stromversorgung 23 und/oder Zugabevorrichtung 27 können wahlweise intern oder extern bezüglich der Versorgungseinheit 20 angeordnet sein.

Die Verteilungsvorrichtung 16 und damit die Membranschläuche 12 werden je nach Bedarf z.B. mittels geeigneter Ventile, wie beispielsweise elektromagnetischer oder über Druckluft betätigter Ventile, oder geeigneter Stellelemente wahlweise an einen der Anschlüsse 22a..d der Versorgungseinheit 20 angeschlossen. Diese Ventile bzw. Stellelemente der Versorgungseinheit 20 werden zum Beispiel von einer Steuereinrichtung 28 in entsprechender Weise angesteuert. Die Steuereinrichtung 28 weist vorzugsweise einen Speicher auf, in dem der Benutzer die von ihm gewünschten Pflegebedingungen und Pflegezyklen der Vegetationsschichten 32 speichern kann, sodass die Pflege automatisch erfolgt. Außerdem kann der Benutzer natürlich jederzeit der Steuereinrichtung 28 manuell Steuerbefehle eingeben, um die Funktion der Steuereinheit 20 unmittelbar und/oder kurzfristig zu beeinflussen oder die gespeicherten Werte zu ändern.

Die Steuereinrichtung 28 steuert außerdem die Stromversorgung 23, die Temperiereinrichtung 26, die Zugabevorrichtung 27 und/oder die Vorrichtung 24 zum Begasen von Flüssigkeiten.

Zusätzlich kann die Steuereinrichtung 28 mit verschiedenen Sensoren 30 verbunden sein, welche für die Pflege der Vegetationsschichten 32 wichtige Umgebungsbedingungen wie zum Beispiel die Temperatur T und die Feuchtigkeit ϕ sowohl der Luft als auch des Erdreichs sowie den pH-Wert des Erdreichs 36 erfassen, um die Pflege der Vegetationsschichten 32 möglichst optimal auf diese aktuellen Umgebungsbedingungen abstimmen zu können.

Wie in Fig. 2 veranschaulicht, werden die Membranschläuche 12 im Erdreich 36 unterhalb des Wurzelbereichs 34 der Vegetationsschicht 32 verlegt. Die typische Einbautiefe der Membranschläuche 12 liegt - abgesehen von Sonderanwendungen - allgemein z.B. zwischen 12 und 25 cm, meist zwischen 15 und 20 cm.

Die Einbautiefe, der Durchmesser, der gegenseitige Abstand und die Porosität der Wandung 12a dieser Membranschläuche 12 sind an die Bodenbeschaffenheit und die Klimaverhältnisse der jeweils zu pflegenden Vegetationsschichten 32 anpassbar.

Zusätzlich kann bei Bedarf unterhalb der Anordnung der Membranschläuche 12 auch noch eine wasserundurchlässige Trennvorrichtung (nicht dargestellt), zum Beispiel in Form einer Folie oder eines Profilblechs angeordnet werden, auf der dann die Membranschläuche 12 verlegt werden, um ein Versickern von Wasser im Erdboden zu verhindern.

Die porösen Membranschläuche 12 sind für Fluide wie Flüssigkeiten und Gase in beiden Durchtrittsrichtungen durchlässig und bestehen vorzugsweise aus einem chemisch und physikalisch widerstandsfähigen Kunststoff- oder Kautschukmaterial. Um eine lange Haltbarkeit des verlegten Pflegesystems ohne Instandsetzungsmaßnahmen zu gewährleisten, sollten die Membranschläuche 12 insbesondere frostsicher, bruchsicher, resistent gegen der Flüssigkeit beigefügte Pflegewirkstoffe, druckfest, usw. sein. In einer bevorzugten Ausführungsform sind die Membranschläuche 12 aus einem Altreifengranulat mittels eines geeigneten Extrusionsverfahrens gefertigt. Die Membranschläuche 12 sind im Allgemeinen flexibel bzw. biegsam ausgebildet, um ein einfaches und flexibles Verlegen sowie eine Lagerung in gewickelter Form zu ermöglichen. Je nach Anwendungsfall können aber auch steife Membranschläuche 12 zum Einsatz kommen.

Zwei Beispiele von Membranschläuchen 12, die für ein solches Pflegesystem eingesetzt werden können, werden nun anhand von Fig. 3 und 4 genauer beschrieben.

In einer ersten Ausführungsform (Fig. 3) besitzen die Membranschläuche 12 eine mit Poren 12b versehene Wandung 12a, die den Durchtritt von Fluiden (Flüssigkeiten und Gase) in beiden Durchtrittsrichtungen erlaubt, und einen durch diese Wandung 12a begrenzten Hohlraum 12c zum Transportieren der Fluide.

Die Querschnittsformen der Membranschläuche sind üblicherweise rund, insbesondere kreisförmig, wie in Fig. 2 bis 4 dargestellt. Die Erfindung ist aber natürlich nicht auf diese Ausführungsformen beschränkt. So können zum Beispiel auch runde Querschnittsformen mit einer oder mehreren abgeflachten Seiten oder mehreckige Querschnittsformen verwendet werden.

Im Hohlraum 12c des Membranschlauchs 12 kann zudem eine Temperiervorrichtung 38 angeordnet sein. Diese Temperiervorrichtung 38 erstreckt sich im Wesentlichen über die gesamte Länge des Membranschlauches 12. Vorzugsweise ist die Temperiervorrichtung 38 derart ausgebildet, dass der Membranschlauch 12 einschließlich der Temperiervorrichtung 38 gewickelt werden kann. Dies kann Lagerung, Transport und Einbau des Membranschlauchs 12 wesentlich vereinfachen.

Die Temperiervorrichtung 38 ist zum Beispiel lose in den Hohlraum 12c des Membranschlauchs 12 eingelegt. Alternativ kann die Temperiervorrichtung 38 auch fest mit einer Innenseite der Wandung 12a des Membranschlauchs 12 verbunden, z.B. verklebt oder dergleichen sein.

In dem Ausführungsbeispiel von Fig. 3 weist die Temperiervorrichtung 38 einen elektrischen Widerstandsheizdraht 40 auf, der zum Beispiel als Konstantandraht ausgebildet und von einer Isolierung 42 umschlossen ist. Der Widerstandsheizdraht 40 ist über die Kupplungselemente 14, 18 mit der Stromversorgung 23 der Versorgungseinheit 20 verbunden. Die Isolierung 42 dient einerseits zum Schutz des elektrischen Widerstandsheizdrahtes 40 vor den durch den Hohlraum 12c des Membranschlauchs 12 strömenden Fluiden und andererseits zum Schutz dieser Fluide sowie der Wandung 12a des Membranschlauchs 12 vor einer Beeinflussung durch den Widerstandsheizdraht 40. Sie hat daher bevorzugt insbesondere elektrisch und chemisch isolierende Eigenschaften.

Ein Membranschlauch 12 gemäß einem zweiten Ausführungsbeispiel ist in Fig. 4 dargestellt. Gleiche Komponenten sind dabei mit den gleichen Bezugsziffern wie in Fig. 3 gekennzeichnet und auf eine Wiederholung ihrer näheren Beschreibung wird verzichtet.

Der Membranschlauch 12 dieses Ausführungsbeispiels unterscheidet sich von dem in Fig. 3 gezeigten Membranschlauch 12 dadurch, dass seine Wandung 12a teilweise verschlossen ist. Dies erfolgt zum Beispiel durch eine Abdichtung 44 an der Außenseite der Wandung 12a, kann aber alternativ oder zusätzlich auch an der Innenseite der Wandung 12a bzw. unmittelbar in den Poren 12b vorgesehen sein.

Die Abdichtung 44 ist vorzugsweise nur auf einer Umfangsseite des Membranschlauchs 12 vorgesehen, wie in Fig. 4 veranschaulicht. Die mit der Abdichtung 44 versehene Seite des Membranschlauchs 12 wird dann beim Installieren des Pflegesystems nach unten gerichtet im Erdreich 36 verlegt. Auf diese Weise kann in vorteilhafter Weise verhindert werden, dass Wasser und/oder Luft, die durch die Membranschläuche 12 zu den Vegetationsschichten 32 geleitet werden sollen, nach unten aus den Membranschläuchen 12 gedrückt werden. Stattdessen werden die Fluide hauptsächlich nach oben aus den Membranschläuchen 12 in das Erdreich 36 herausgedrückt und können damit rascher und sicherer dem Wurzelbereich 34 der Vegetationsschichten 32 zugeführt werden. Mit anderen Worten können die Drainage der zugeführten Fluide durch Gravitation vermindert und die kapillare Verteilung in Richtung zum Wurzelbereich verbessert werden. Dies kann in vorteilhafter Weise zu einer Wassereinsparung des gesamten Pflegesystems führen.

Das teilweise Verschließen der Wandung 12a der Membranschläuche 12 kann außerdem zu einem verbesserten Fließverhalten der Fluide durch die Membranschläuche 12 führen. Insbesondere können die Fluide mit einer gleichmäßigeren und gleichbleibenden Geschwindigkeit durch die Membranschläuche 12 transportiert werden, was zu einer gleichmäßigeren Verteilung der Fluide über einen großen Pflegebereich 10 hinweg führt. Dieser Effekt kommt insbesondere auch beim Verlegen der Membranschläuche 12 in unebenen Geländeformen zur Geltung, da Höhendifferenzen bzw. Steigungen auch mit geringeren Fluiddrücken besser überwunden werden können.

In dem Ausführungsbeispiel von Fig. 4 können bis zu etwa 50% der Wandung 12a mit der Abdichtung 44 verschlossen sein. Allgemein kann ein Verschließen der Wandung 12a der Membranschläuche 12 mit Anteilen von etwa 20% bis etwa 65%, bevorzugter von etwa 35% bis etwa 55% von Vorteil sein.

Die teilweise verschlossene Wandung 12a ist nicht auf die Verteilung der Abdichtung 44 von Fig. 4 beschränkt. Alternativ sind auch ein spiralförmiges Umwickeln des Membranschlauchs 12 mit einem Abdichtband 44 oder das Umwickeln des Membranschlauchs 12 mit einem Abdichtband 44 in regelmäßigen oder unregelmäßigen Abständen denkbar.

Der Membranschlauch 12 von Fig. 4 enthält im Gegensatz zu dem in Fig. 3 dargestellten Membranschlauch 12 keine Temperiervorrichtung 38. Selbstverständlich kann eine derartige Temperiervorrichtung 38 aber auch bei dem in Fig. 4 veranschaulichten Membranschlauch 12 eingebaut werden.

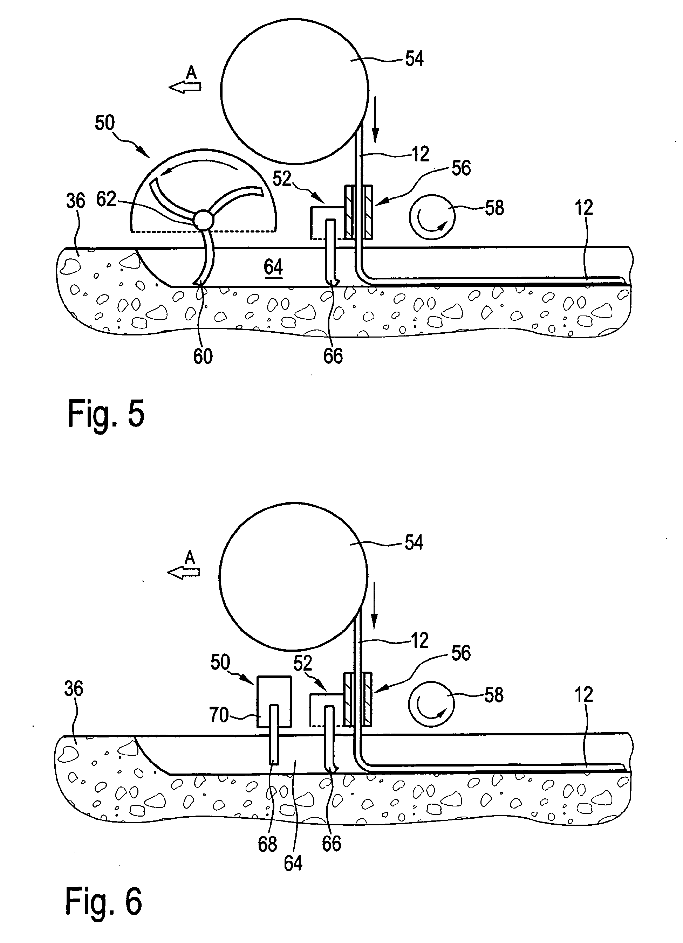

Nachfolgend werden nun unter Bezug auf Fig. 5 und 6 zwei mögliche Vorrichtungen zum unterflurigen Verlegen von Membranschläuchen 12 und damit zum Installieren des oben beschriebenen Pflegesystems der Erfindung erläutert.

Die in Fig. 5 dargestellte Vorrichtung zum unterflurigen Verlegen eines Membranschlauchs 12 enthält insbesondere eine Schneidevorrichtung 50, eine Aufweitungsvorrichtung 52, eine Aufnahmevorrichtung 54 zum Aufnehmen eines zu verlegenden Membranschlauchs 12, eine Einlegevorrichtung 56 und eine Walze 58. Diese Komponenten 50 - 58 sind in einer Bewegungsrichtung (Pfeil A) beim Verlegevorgang in dieser Reihenfolge hintereinander angeordnet. In bevorzugter Weise können diese Komponenten 50 - 58 dabei an einem gemeinsamen Gerät, zum Beispiel einem selbstfahrenden Gerät oder einem an ein Fahrzeug wie einen Traktor, eine Zugmaschine oder dergleichen anhängbaren Gerät, montiert sein, um das Verlegen des Membranschlauchs 12 in einem Arbeitsgang durchführen zu können.

Wie in Fig. 5 angedeutet, sind die Aufweitungsvorrichtung 52 und die Einlegevorrichtung 56 bevorzugt integral ausgebildet. Das heißt, sie sind zum Beispiel als eine Einheit ausgebildet oder fest miteinander verbunden. Insbesondere sollen die beiden Vorrichtungen 52 und 56 möglichst nah hintereinander angeordnet sein.

In der Seitenansicht von Fig. 5 ist jeweils nur eine der genannten Komponenten 50 - 58 zu erkennen, die dem Verlegen eines einzelnen Membranschlauchs 12 dienen. Selbstverständlich können in einer bevorzugten Ausführungsform der Erfindung auch gleichzeitig mehrere Membranschläuche 12 parallel verlegt, sodass auch die Komponenten 50 - 58 in entsprechender Anzahl parallel zueinander (in der Richtung senkrecht zur Zeichnungsebene nebeneinander) an der Vorrichtung vorgesehen sind. Da die parallel angeordneten Komponenten 50 - 58 grundsätzlich gleich aufgebaut sind, wird nachfolgend der Einfachheit halber nur die Vorrichtung zum Verlegen eines einzelnen Membranschlauchs 12 beschrieben.

Die in Bewegungsrichtung A vorderste Komponente, die Schneidevorrichtung 50 enthält mehrere (zum Beispiel drei) rotierende Schneidmesser 60, die an einer gemeinsamen Rotationswelle 62 in vorzugsweise festem Winkelabstand zueinander angebracht sind. Diese Schneidmesser 60 dienen dem Schneiden eines Schlitzes 64 in den Boden der Vegetationsschichten 32. Die Schneidevorrichtung 50 ist dabei so positioniert und die Schneidmesser 60 sind dabei so bemessen, dass der Schlitz 64 eine Tiefe von mindestens der Einbautiefe des zu verlegenden Membranschlauchs 12 aufweist. Ferner ist die Breite der Schneidmesser 60 (quer zur Bewegungsrichtung A) kleiner oder gleich dem Durchmesser des zu verlegenden Membranschlauchs 12 gewählt, sodass eine ggf. vorhandene Vegetationsschicht 32 möglichst wenig beschädigt wird.

Wie in Fig. 5 angedeutet, sind die Schneidmesser 60 etwa sichelförmig gekrümmt ausgebildet, wobei ihre Wölbung im Schlitz 64 bezüglich der Bewegungsrichtung A nach hinten gerichtet ist. Hierdurch kann verhindert werden, dass Steine und dergleichen nach oben zur Oberfläche der Pflegefläche 10 befördert werden; außerdem erfolgt der Druck durch die Schneidmesser 60 auf das Erdreich hauptsächlich in Richtung nach unten, sodass eine seitliche Verdichtung des Erdreichs 36 verringert werden kann.

Das Schneiden des Schlitzes 64 erfolgt durch eine Kombination der Drehbewegung der Rotationswelle 62 mit den daran angebrachten Schneidmessern 60 und der Vorwärtsbewegung der Schneidevorrichtung 50 in der Bewegungsrichtung A.

Nach dem Schneiden des Schlitzes 64 durch die Schneidevorrichtung 50 wird der Schlitz 64 durch ein feststehendes Aufweitmesser 66 der Aufweitungsvorrichtung 52 auf eine Breite im Wesentlichen gleich dem Durchmesser des zu verlegenden Membranschlauchs 12 aufgeweitet. Das Aufweitmesser 66 hat dabei eine Eindringtiefe ins Erdreich, die der Einbautiefe des zu verlegenden Membranschlauchs 12 entspricht. Wie in Fig. 5 angedeutet, ist das untere Ende des Aufweitmessers 66 bezüglich der Bewegungsrichtung A bevorzugt nach hinten abgewinkelt, um zu vermeiden, dass Steine und dergleichen an die Oberfläche befördert werden.

In der Aufnahmevorrichtung 54 befindet sich eine Haspel, auf der ein zu verlegender Membranschlauch 12 aufgewickelt ist. Mit Hilfe eines Führungselements der Einlegevorrichtung 56 wird der Membranschlauch 12 von der Haspel abgewickelt und in den durch das Aufweitmesser 66 aufgeweiteten Schlitz 64 eingelegt. Die Zufuhr des Membranschlauchs 12 in den Schlitz 64 kann allein durch die Bewegung A der Einlegevorrichtung 56 (und der übrigen Komponenten 50 - 58) erfolgen; wahlweise kann aber auch eine zusätzliche Fördereinrichtung vorgesehen sein.

Nachdem der Membranschlauch 12 in den Schlitz 64 eingelegt ist, wird der Schlitz 64 durch die nachlaufende Walze 58 wieder geschlossen.

Obwohl nicht dargestellt, kann die Vorrichtung zum unterflurigen Verlegen eines Membranschlauchs 12 zusätzlich einen Vorratsbehälter für zusätzliche Mittel, wie beispielsweise Sand, Dünger, Saatgut und dergleichen, aus dem das zusätzliche Mittel in den Schlitz 64 einbringbar ist, und/oder eine weitere Aufnahmevorrichtung für eine wasserundurchlässige Trennvorrichtung sowie eine Einlegevorrichtung zum Abnehmen der Trennvorrichtung von der weiteren Aufnahmevorrichtung und Einlegen der Trennvorrichtung in den aufgeweiteten Schlitz, bevor der Membranschlauch 12 eingelegt wird, aufweisen.

Obige sowie weitere Einzelheiten des Aufbaus und der Funktionsweise dieser Vorrichtung zum Verlegen eines Membranschlauchs 12 ergeben sich aus dem Studium der EP 1 811 218 A1 des Erfinders. Auf diese Druckschrift wird hiermit vollinhaltlich Bezug genommen.

Fig. 6 zeigt eine Verlegevorrichtung für Membranschläuche 12 gemäß einem alternativen Ausführungsbeispiel. Dabei sind gleiche bzw. analoge Komponenten mit den gleichen Bezugsziffern wir in Fig. 5 gekennzeichnet und auf eine Wiederholung ihrer Beschreibung wird verzichtet.

Die Installationsvorrichtung dieses Ausführungsbeispiels unterscheidet sich von der obigen Vorrichtung von Fig. 5 durch die Art der Schneidevorrichtung 50. Während die Schneidevorrichtung 50 in Fig. 5 mit mehreren rotierenden Schneidmessern 60 ausgebildet ist, weist die Schneidevorrichtung 50 von Fig. 6 ein vertikal angetriebenes Schneidmesser 68 mit einem entsprechenden Hubantrieb 70 auf. Wahlweise können auch zwei oder mehr Schneidmesser 68 in Bewegungsrichtung A hintereinander und/ oder nebeneinander vorgesehen sein.

Wie ein Vergleich von Fig. 6 mit Fig. 5 zeigt, hat die Installationsvorrichtung von Fig. 6 eine in Bewegungsrichtung A kürzere Baulänge. Dies hat wiederum den Vorteil, dass mit dieser kürzeren Installationsvorrichtung auch Radien gefahren werden können. Je nach Geländeformen und Aufbauten der Pflegebereiche 10 kann dies ein unterfluriges Verlegen der Membranschläuche 12 erleichtern, ein im Wesentliches horizontales Verlegen der Membranschläuche 12 ermöglichen und die Einsatzmöglichkeiten der Verlegevorrichtung erweitern.

Selbstverständlich können die gemäß der vorliegenden Erfindung ausgestalteten Membranschläuche 12 aber auch mit anderen Vorrichtungen und/oder manuell installiert werden.

### BEZUGSZIFFERNLISTE

- 10: Pflegebereich
- 12: Membranschlauch
- 14: Kupplungselement
- 16: Verteilungsvorrichtung
- 18: Kupplungselement
- 20: Versorgungseinheit
- 21: Druckregler
- 22a: erster Anschluss von 20
- 22b: zweiter Anschluss von 20
- 22c: dritter Anschluss von 20
- 22d: vierter Anschluss von 20
- 23: Stromversorgung
- 24: Vorrichtung zum Begasen von Flüssigkeiten
- 25a: erster Anschluss von 24
- 25b: zweiter Anschluss von 24
- 26: Temperiereinrichtung
- 27: Zugabevorrichtung
- 28: Steuervorrichtung
- 29: Filtervorrichtung
- 30: Sensoren
- 32: Vegetationsschicht
- 34: Wurzelbereich
- 36: Erdreich
- 38: Temperiervorrichtung
- 40: Widerstandsheizdraht
- 42: Isolierung
- 44: Abdichtung
- 50: Schneidevorrichtung
- 52: Aufweitungsvorrichtung
- 54: Aufnahmevorrichtung
- 56: Einlegevorrichtung
- 58: Walze
- 60: rotierende Schneidmesser
- 62: Rotationswelle
- 64: Schlitz
- 66: Aufweitmesser
- 68: Schneidmesser
- 70: Hubantrieb für 68

## Patentansprüche

1. Verfahren zur Pflege von Vegetationsschichten, bei welchem den Vegetationsschichten (32) mittels wenigstens eines unterflurig verlegten Membranschlauchs (12) ein Fluid zugeführt wird,
**dadurch gekennzeichnet,**
**dass** das Fluid ein Flüssigkeit/Gas-Gemisch ist.

2. Verfahren nach Anspruch 1,
**dadurch gekennzeichnet,**
**dass** das Flüssigkeit/Gas-Gemisch durch Begasen einer Flüssigkeit erzeugt wird.

3. Verfahren nach einem der vorhergehenden Ansprüche,
**dadurch gekennzeichnet,**
**dass** das Flüssigkeit/Gas-Gemisch ein Wasser/Luft-Gemisch oder ein Wasser/Sauerstoff-Gemisch ist.

4. Verfahren nach einem der vorhergehenden Ansprüche,
**dadurch gekennzeichnet,**
**dass** das Flüssigkeit/Gas-Gemisch vor dem Zuführen zu den Vegetationsschichten (32) und/oder im Wesentlichen während des gesamten Zufuhrweges zu den Vegetationsschichten (32) temperiert wird.

5. Verfahren nach einem der vorhergehenden Ansprüche,
**dadurch gekennzeichnet,**
**dass** ein Druck des Flüssigkeit/Gas-Gemisches auf einen vorbestimmten Wert oder Wertebereich geregelt bzw. gesteuert wird.

6. Vorrichtung zur Pflege von Vegetationsschichten, mit wenigstens einem unterflurig verlegten Membranschlauch (12) zum Zuführen eines Fluids zu den Vegetationsschichten (32) und einer mit dem wenigstens einen Membranschlauch (12) verbundenen Versorgungseinheit (20),
**dadurch gekennzeichnet,**
**dass** die Versorgungseinheit (20) wenigstens eine Vorrichtung (24) zum Bereitstellen eines Flüssigkeit/Gas-Gemisches aufweist.

7. Vorrichtung nach Anspruch 6,
**dadurch gekennzeichnet,**
**dass** die Vorrichtung (24) zum Bereitstellen eines Flüssigkeit/Gas-Gemisches eine Vorrichtung zum Begasen von Flüssigkeiten ist.

8. Vorrichtung nach Anspruch 6 oder 7,
**dadurch gekennzeichnet,**
**dass** die Vorrichtung (24) zum Bereitstellen eines Flüssigkeit/Gas-Gemisches in die Versorgungseinheit (20) integriert ist oder die Versorgungseinheit (20) einen Anschluss (22d) zum Anschließen der Vorrichtung (24) zum Bereitstellen eines Flüssigkeit/Gas-Gemisches an die Versorgungseinheit (20) aufweist.

9. Vorrichtung nach einem der Ansprüche 6 bis 8,
**dadurch gekennzeichnet,**
**dass** die Vorrichtung (24) zum Bereitstellen eines Flüssigkeit/Gas-Gemisches derart ausgebildet ist, dass sie wahlweise auch nur eine Flüssigkeit oder nur ein Gas bereitstellt.

10. Vorrichtung nach einem der Ansprüche 6 bis 9,
**dadurch gekennzeichnet,**
**dass** das Flüssigkeit/Gas-Gemisch ein Wasser/Luft-Gemisch oder ein Wasser/Sauerstoff-Gemisch ist.

11. Vorrichtung nach einem der Ansprüche 6 bis 10,
**dadurch gekennzeichnet,**
**dass** die Versorgungseinheit (20) ferner wenigstens einen Anschluss (22a..c) aufweist, der ausgewählt ist aus einem Anschluss (22a) zum Zuführen einer Flüssigkeit unter Druck, einem Anschluss (22c) zum Zuführen eines Gases unter Druck und einem Anschluss (22b) zum Entfernen von Flüssigkeiten und/oder Gasen durch Unterdruck in den bzw. aus dem wenigstens einen Membranschlauch (12).

12. Vorrichtung nach einem der Ansprüche 6 bis 11,
**dadurch gekennzeichnet,**
**dass** die Versorgungseinheit (20) mit einer Temperiereinrichtung (26) zum Temperieren des dem wenigstens einen Membranschlauch (12) zugeführten Fluids und/oder der wenigstens eine Membranschlauch (12) im Wesentlichen über seine gesamte Länge mit einer Temperiervorrichtung (38) versehen ist.

13. Vorrichtung nach einem der Ansprüche 6 bis 12,
**dadurch gekennzeichnet,**
**dass** eine Zugabevorrichtung (27) zum Zugeben eines zusätzlichen Wirkstoffes zu dem dem wenigstens einen Membranschlauch (12) zugeführten Fluid vorgesehen ist.

14. Vorrichtung nach einem der Ansprüche 6 bis 13,
**dadurch gekennzeichnet,**
**dass** die Versorgungseinheit (20) und/oder die Vorrichtung (24) zum Bereitstellen eines Flüssigkeit/Gas-Gemisches einen Druckregler (21) zum Regeln bzw. Steuern eines Drucks des den Vegetationsschichten (32) zugeführten Fluids aufweisen.

15. Vorrichtung nach einem der Ansprüche 6 bis 14,
**dadurch gekennzeichnet,**
**dass** die Versorgungseinheit (20) und/oder die Vorrichtung (24) zum Bereitstellen eines Flüssigkeit/Gas-Gemisches eine Filtervorrichtung (29) zum Filtern des den Vegetationsschichten (32) zugeführten Fluids aufweisen.
